# EUROPÄISCHE PATENTSCHRIFT

(11) **EP 0 772 746 B1**
(45) Veröffentlichungstag und Bekanntmachung des Hinweises auf die Patenterteilung: **19.08.1998**
(21) Anmeldenummer: 95925758.5
(22) Anmeldetag: 24.06.1995
(51) Int. Cl.: F15B 11/12, B23Q 16/04

(54) **POSITIONIERANTRIEB, INSBESONDERE FÜR EINE WERKZEUGMASCHINE**
POSITIONING DRIVE, IN PARTICULAR FOR A MACHINE TOOL
DISPOSITIF DE COMMANDE DE POSITIONNEMENT, NOTAMMENT POUR MACHINE-OUTIL

(30) Priorität: 22.07.1994 DE 4426032
(43) Veröffentlichungstag der Anmeldung: 14.05.1997
(73) Patentinhaber: Mannesmann Rexroth Aktiengesellschaft, 97816 Lohr am Main (DE)
(72) Erfinder: FISCHER, Günter, D-97737 Gemünden (DE); KNÖLL, Rainer, D-97775 Burgsinn (DE)
(86) Internationale Anmeldenummer: EP9502467
(87) Internationale Veröffentlichungsnummer: WO9603586

(56) Entgegenhaltungen:
- DE-A- 2 349 099
- DE-A- 4 345 165
- JP-U-62 195 435
- PATENT ABSTRACTS OF JAPAN vol. 10 no. 304 (M-526) ,16.Oktober 1986 & JP,A,61 117039 (TOSHIBA) 4.Juni 1986,

## Beschreibung

Die Erfindung geht aus von einem Positionierantrieb, der insbesondere an Werkzeugmaschinen verwendet wird und der die Merkmale aus dem Oberbegriff des Anspruchs 1 aufweist.

Ein solcher Positionierantrieb wird insbesondere dazu benutzt, um ein Maschinenteil, für das vorzugsweise mehrere verschiedene Positionierungen möglich sind, in eine bestimmte Position zu bringen. Bei dem Maschinenteil kann es sich z.B. um einen mehrspindligen Revolverkopf einer Bohrmaschine oder um einen Werkstückträger einer Maschine mit mehreren Bearbeitungsstationen handeln.

Ein Positionierantrieb mit den Merkmalen aus dem Oberbegriff des Anspruchs 1 ist aus der unter der Nr. 62/195435 veröffentlichten japanischen Gebrauchsmusteranmeldung bekannt. Bei diesem Positionierantrieb ist das Gehäuseteil des Steuerventils am Gehäuseteil des Hydromotors so befestigt, daß die Achse des Ventilkolbens senkrecht und tangential zur Achse der Motorwelle verläuft. Das Steuerelement ist ein zweiarmiger Hebel, der im Motorgehäuseteil so gelagert ist, daß er um eine parallel zur Motorwelle verlaufende Achse verschwenkbar ist. Am Ende des einen Hebelarms kann das Steuerelement die Steuerkurve an der drehfest auf der Motorwelle sitzenden Steuerscheibe beaufschlagen, wobei der Hebelarm etwa senkrecht zu einem Radiusstrahl zwischen der Achse der Motorwelle und der Berührungsstelle zwischen Steuerscheibe und Steuerelement verläuft. Am Ende des anderen Hebelarms umgreift das Steuerelement gabelförmig ein am Ventilkolben befestigtes Einstellelement. Dieses ist als Buchse ausgebildet, die außen zwei einander diametral gegenüberliegende Mitnahmezapfen aufweist, die vom Steuerelement umgriffen werden, und die mit einem Innengewinde auf einen mit einem Außengewinde versehenen Abschnitt des Ventilkolbens aufgeschraubt ist. Mit einer Kontermutter ist die relative Lage zwischen Ventilkolben und Einstellelement gesichert.

Ein anderer Positionierantrieb ist aus der DE-AS 23 49 099 bekannt. Bei diesem Positionierantrieb ist das Steuerelement ein Steuerbolzen, der einstückig mit dem Ventilkolben ausgebildet ist. Steuerbolzen und Ventilkolben sind radial bezüglich der Steuerscheibe bewegbar. Schließlich ist in der älteren deutschen Patentanmeldung P 43 12 581.6 ein Positionierantrieb beschrieben, bei dem ein Steuerkolben und ein Ventilkolben ebenfalls in Flucht zueinander radial zur Steuerscheibe angeordnet sind. Steuerkolben und Ventilkolben sind allerdings zwei separate Teile.

Bei den skizzierten Positionierantrieben ist der Ventilkolben in beide Bewegungsrichtungen hydraulisch verstellbar. Durch eine Bewegung in die eine Richtung wird das Steuerelement von der Steuerkurve abgehoben. In dieser Position des Steuerelements und des Ventilkolbens dreht sich der Motor mit der maximal vorgesehenen Geschwindigkeit. Eine Bewegung des Ventilkolbens in die andere Richtung ist nur soweit möglich, bis das Steuerelement an der Steuerkurve anliegt, und wird dann, solange der Ventilkolben einer in die entsprechende Richtung wirkenden Kraft ausgesetzt ist, durch die Form der Steuerkurve bestimmt. Liegt das Steuerelement in einem Bereich an der Steuerkurve an, in dem dies einen konstanten Abstand von der Achse der Motorwelle hat, so bleibt der Ventilkolben in Ruhe. In einem Bereich, in dem sich der Abstand der Steuerkurve von der Achse der Motorwelle verkleinert, bewegt sich der Ventilkolben in Richtung der auf ihn wirkenden Kraft. In Positionen des Ventilkolbens, in der dieser über das Steuerelement an der Steuerkurve abgestützt ist, ist in den Hydraulikkreis ablaufseitig eine Drossel geschaltet, deren Drosselwirkung in einem begrenzten Bereich von der Position des Ventilkolbens abhängt. Der Motor bewegt sich nun in einem Schleichgang, um die angewählte Position zu erreichen. Ist die angewählte Position erreicht, so fällt das Steuerelement in eine Einbuchtung der Steuerkurve hinein, die einer oder mehreren Positionen des Maschinenteils zugeordnet ist, und der Ventilkolben gerät in eine Stellung, in der der Hydromotor nicht mehr mit Druckmittel versorgt wird.

Bei dem aus der DE-AS 23 49 099 bekannten Positionierantrieb und bei dem in der älteren deutschen Patentanmeldung P 43 12 581.6 beschriebenen Positionierantrieb kann man die Wirkung der Drossel nicht justieren. Bei dem aus der japanischen Gebrauchsmusteranmeldung bekannten Positionierantrieb kann man die auf den mit einem Außengewinde versehenen Abschnitt des Ventilkolbens aufgeschraubte Kontermutter lösen und den Ventilkolben und das Einstellelement dadurch axial zueinander verstellen, daß man diese beiden Teile gegeneinander verdreht. Dadurch verändert sich die relative Lage zwischen dem Ventilkolben und dem Steuerelement, so daß sich für eine bestimmte Position des Steuerelements die Wirkung der Drossel verändert. Dadurch kann der Antrieb an unterschiedliche Gegebenheiten bei unterschiedlichen Einsatzfällen angepaßt werden. Die Kontermutter befindet sich bei dem bekannten Positionierantrieb in einem Hohlraum des Gehäuses, in den der Ventilkolben hineinragt, der in Betrieb mit Hydrauliköl gefüllt ist und der in Verlängerung des Ventilkolbens eine Öffnung besitzt, die durch eine Verschlußschraube verschlossen ist. Um die Kontermutter zu lösen, ist es also notwendig, die Verschlußschraube zu entfernen. Beim Entfernen der Verschlußschraube fließt Öl aus dem Hohlraum heraus, sofern nicht vorher der Ölspiegel abgesenkt worden ist. Schließlich muß nach einer Justage und nach dem Aufschrauben der Verschlußschraube der Motor entlüftet werden.

Der Erfindung liegt die Aufgabe zugrunde, einen Positionierantrieb mit den Merkmalen aus dem Oberbegriff des Anspruchs 1 so weiterzuentwickeln, daß die Justierung des Ventilkolbens zum Steuerelement mit wesentlich geringerem zeitlichem Aufwand und auf einfache Weise durchgeführt werden kann.

Dieses Ziel wird bei einem Positionierantrieb, der die Merkmale aus dem Oberbegriff des Anspruchs 1 aufweist, dadurch erreicht, daß das äußere der beiden koaxial zueinander angeordneten Teile, nämlich der Ventilkolben oder das Einstellelement, durch das Gehäuse der das Steuerventil und den Hydromotor umfassenden Baueinheit nach außen geführt ist und daß das Sicherungselement, z.B. eine Kontermutter, außerhalb des Gehäuses zugänglich ist. Außerhalb des Gehäuses zugänglich bedeutet dabei nicht, daß sich das Sicherungselement außerhalb einer Außenkontur des Gehäuses befindet. Es bedeutet lediglich, daß kein Öffnen des Gehäuses notwendig ist, um an das Sicherungselement zu gelangen. Denkbar ist dabei z.B. eine Konstruktion, bei der sich das Sicherungselement innerhalb des äußeren der beiden Teile Ventilkolben und Einstellelement und innerhalb der Außenkontur des Gehäuses befindet, daß es jedoch z.B. durch das mit einem axialen Durchgang versehene äußere und nach außen geführte Teil hindurch ohne weiteres von außen zugänglich ist.

Vorteilhafte Ausgestaltungen eines erfindungsgemäßen Positionierantriebs kann man den Unteransprüchen entnehmen.

Wie schon angedeutet, genügt es grundsätzlich, wenn das äußere der beiden Teile Ventilkolben und Einstellelement aus dem Gehäuse heraus nach außen geführt ist. Bei einer Konstruktion gemäß der japanischen Gebrauchsmusteranmeldung wäre dies das buchsenförmige Einstellelement. Die Länge des Ventilkolbens muß nicht verändert werden. Als Sicherungselement kann z.B. eine Stiftschraube verwendet werden, die von außen in das buchsenförmige Einstellelememt soweit eingeschraubt ist, daß sie stramm am Ventilkolben anliegt. Es genügt dabei eine kurze Stiftschraube, die nicht über das Einstellelement hinausragt und die mit einem Innenmehrkant oder mit einem Schlitz versehen ist, um mit einem Werkzeug an ihr angreifen zu können. Das Sicherungselement ist jedoch leichter zugänglich, wenn ein erfindungsgemäßer Positionierantrieb durch die Merkmale des Anspruchs 2 weitergebildet wird. Nach diesem Anspruch ist außer dem äußeren der beiden Teile auch das innere der beiden Teile Ventilkolben und Einstellelement nach außen geführt, wobei das innere Teil das äußere Teil überragt und das Sicherungselement eine auf das innere Teil aufgeschraubte Schraubenmutter ist.

Damit in dem Bereich des Gehäuses, in dem der Ventilkolben und/oder das Einstellelement aus dem Gehäuse herausgeführt sind, kein Öl nach außen dringt, ist der Positionierantrieb zweckmäßigerweise gemäß Anspruch 3 abgedichtet.

Ist das Steuerelement an einem ersten Ende des Ventilkolbens angeordnet, so kann man durch eine Ausbildung gemäß Anspruch 4 erreichen, daß eine Justierung von anderen Ende des Ventilkolbens aus möglich ist. Der Ventilkolben ragt dazu mit seinem zweiten Ende aus der Baueinheit heraus und weist eine durchgehende Axialbohrung auf. Das Justierelement ist als Justierstange in der Axialbohrung des Ventilkolbens aufgenommen. Außerdem ist durch ein Außengewinde an der Justierstange und ein Innengewinde am Ventilkolben ein Schraubgelenk zwischen Justierelement und Ventilkolben gebildet. Durch ein Verdrehen des Ventilkolbens gegenüber der Justierstange wird die relative Lage zwischen Ventilkolben und Steuerelement verändert. Vorteilhafterweise ragt die Justierstange gemäß Anspruch 5 mit einem Außengewindeabschnitt, mit dem sie in das Innengewinde des Ventilkolbens eingreift, über diesen hinaus. Auf diesen Außengewindeabschnitt ist dann zur Sicherung der Lage von Justierstange und Ventilkolben zueinander eine Kontermutter aufgeschraubt. Es ist also nicht jeweils ein separater Außengewindeabschnitt an der Justierstange für den Ventilkolben und für die Kontermutter vorhanden.

Eine Ausbildung gemäß den Ansprüchen 4 oder 5 ist besonders vorteilhaft, wenn das Steuerelement als Steuerbolzen in Verlängerung des Ventilkolbens angeordnet ist. Die Justierstange ist gemäß Anspruch 6 vorteilhafterweise auch dann als separates Bauteil ausgebildet und am Steuerbolzen befestigt, insbesondere mit dem Steuerbolzen verschraubt. Ist der in Verlängerung des Ventilkolbens angeordnete Steuerbolzen verdrehgesichert im Gehäuse geführt, so ist keine separate direkte Verdrehsicherung zwischen der Justierstange und dem Gehäuse notwendig, wenn die Justierstange gemäß Anspruch 7 verdrehgesichert mit dem Steuerbolzen verbunden ist.

Gemäß Anspruch 8 sind über die Axialbohrung des Ventilkolbens zwei Fluidanschlüsse der Baueinheit miteinander verbindbar. Die Axialbohrung erfüllt also eine doppelte Funktion. Zum einen nimmt sie die Justierstange auf und zum anderen ist sie Teil einer möglichen Fluidverbindung zwischen zwei Anschlüssen. Dadurch ist es u.U. möglich, im Vergleich zu einem bekannten oder vorbeschriebenen Positionierantrieb auf eine oder mehrere Gehäusebohrungen zu verzichten oder den Durchflußquerschnitt zwischen den zwei Fluidanschlüssen der Baueinheit zu vergrößern. Da der Verzicht auf Gehäusebohrungen oder die Vergrößerung des Durchflußquerschnitts durch eine Axialbohrung im Ventilkolben auch dann möglich sind, wenn der Ventilkolben nicht gegenüber dem Steuerelement justierbar ist, ist das Merkmal aus dem kennzeichnenden Teil des Anspruchs 8 bei einem Positionierantrieb auch ohne Merkmale aus den vorhergehenden Ansprüchen mit Vorteilen verwendbar. Die Verwendung der Axialbohrung als Teil einer Verbindung zwischen zwei Fluidanschlüssen ist vor allem auch dann besonders günstig, wenn die Axialbohrung axial zu einer Kammer des Gehäuses offen ist, die mit einem ersten Fluidanschluß verbunden ist. Dann ist nämlich lediglich eine einzige weitere Querbohrung im Ventilkolben notwendig, um die Axialbohrung als Teil der Verbindung zwischen zwei Fluidanschlüssen verwenden zu können.

Zwei Ausführungsbeispiele eines erfindungsgemäßen Positionierantriebes sind in den Zeichnungen dargestellt. Anhand der Figuren dieser Zeichnungen wird die Erfindung nun näher erläutert.

Es zeigen
- Figur 1: das erste Ausführungsbeispiel in einer schematischen Darstellung,
- Figur 2: einen Schnitt durch das erste Ausführungsbeispiel senkrecht durch die Motorwelle und in der Achse des Ventilkolbens,
- Figur 3: einen Teilschnitt durch das erste Ausführungsbeispiel im Bereich des Steuerkolbens und senkrecht zu dem Schnitt aus Figur 2,
- Figur 4: eine Ansicht des als Justierstange ausgebildeten Justierelements aus den Figuren 2 und 3,
- Figur 5: die in den Figuren 2 und 3 sichtbare Kontermutter zwischen Ventilkolben und Justierelement,
- Figur 6: in vergrößertem Maßstab einen Schnitt durch den Ventilkolben gemäß der Linie VI-VI aus Figur 2 und
- Figur 7: einen Ausschnitt des Ventilkolbens eines zweiten Ausführungsbeispiels mit einer Hutmutter als Kontermutter zwischen Justierstange und Ventilkolben.

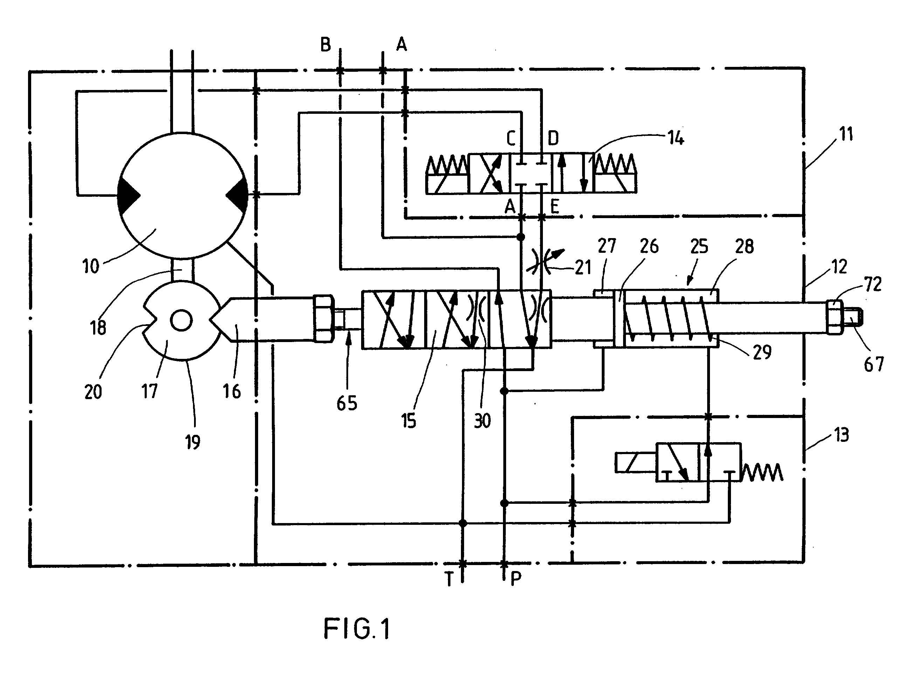

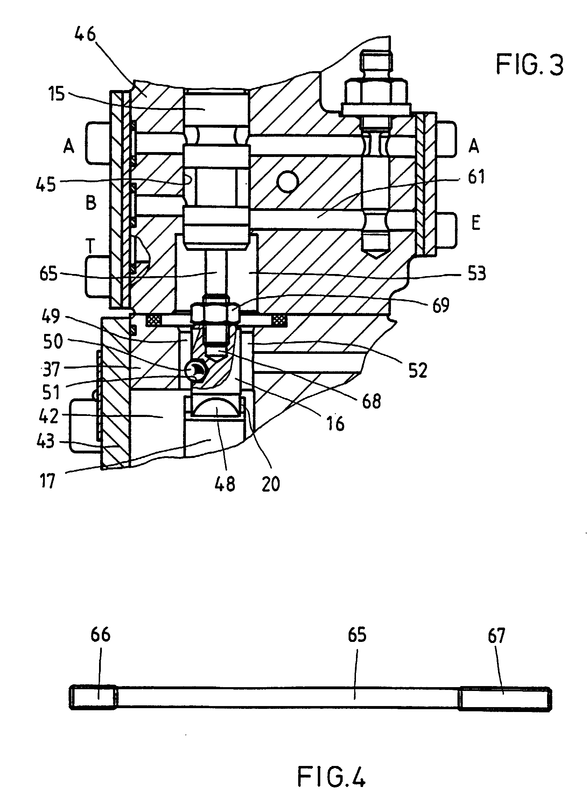

Der Positionierantrieb nach den Figuren 1 bis 5 umfaßt einen Hydromotor 10, der bei niedriger Geschwindigkeit ein hohes Drehmoment erzeugt, ein Drehrichtungsventil 11, ein Steuerventil 12 und ein 3/2-Wege-Startventil 13. Das Drehrichtungsventil 11 ist ein 4/3-Wegeventil, dessen Ventilkolben 14 federzentriert ist und elektromagnetisch bewegt werden kann. In der mittleren Ruhestellung des Ventilkolbens 14 sind die mit dem Hydromotor 10 verbundenen Ausgänge C und D des Drehrichtungsventils 11 von zwei Eingängen A und E getrennt. In den beiden Arbeitsstellungen sind die Eingänge wechselweise mit den Ausgängen verbunden. Das einen Ventilkolben 15 aufweisende Steuerventil 12 besitzt einen Eingang T, der mit einem Druckmittelvorratsbehälter, und einen Eingang P, der mit der Druckseite einer Hydropumpe verbunden ist. Zwei Ausgänge des Steuerventils 12 entsprechen den beiden Eingängen A und E des Drehrichtungsventils, ein mit B bezeichneter Ausgang des Steuerventils 12 ist ein externer Anschluß des Positionierantriebs. Auch der Ausgang A ist als externer Anschluß auf eine Außenseite des Positionierantriebs geführt.

In der Verbindung zwischen dem einen Ausgang des Steuerventils 12 und dem Eingang E des Drehrichtungsventils 11 ist eine verstellbare Drossel 21 angeordnet, mit der eine Maximalgeschwindigkeit des Hydromotors 10 eingestellt werden kann.

Die Längsachse eines Steuerbolzens 16 fällt mit der Längsachse des Ventilkolbens 15 zusammen. Ventilkolben 15 und Steuerbolzen 16 sind zusammen radial zu einer Steuerscheibe 17 angeordnet und bewegbar, die drehfest auf der Motorwelle 18 des Hydromotors 10 sitzt. Der Steuerbolzen 16 wirkt mit einer durch eine entsprechende Form des Außenumfangs der Steuerscheibe 17 gebildeten Steuerkurve 19 zusammen, die diametral gegenüberliegend zwei Rastkerben 20 aufweist und in den beiden Bereichen zwischen den beiden Rastkerben den gleichen konstanten Abstand von der Achse der Motorwelle hat.

Das Steuerventil 12 besitzt einen Steuerraum 25, den der Ventilkolben 15 mit einem Außenbund 26 in zwei Ringräume 27 und 28 mit unterschiedlich großen Ringflächen aufteilt. Die kleinere Ringfläche des Außenbunds 26 und damit der kleinere Ringraum 27 befindet sich, vom Steuerbolzen 16 aus gesehen, diesseits des Außenbunds 26 und die größere Ringfläche und damit der größere Ringraum 28 jenseits des Außenbundes 26. Der Ringraum 27 ist dauernd mit dem Eingang P des Steuerventils 12 verbunden. Der Ringraum 28 ist an das Startventil 13 angeschlossen und in dessen Ruhestellung mit dem Druckeingang P verbunden und in dessen Arbeitsstellung über den Eingang T des Steuerventils 12 zum Druckmittelvorratsbehälter hin entlastbar. In dem Ringraum 28 ist noch eine Schraubendruckfeder 29 untergebracht, die den Ventilkolben 15 und den Steuerbolzen 16 in Richtung auf die Steuerkurve 19 zu belastet.

In dem Zustand nach Figur 1 greift der Steuerbolzen 16 unter der Wirkung der Feder 29 in eine Rastkerbe 20 der Steuerkurve 19 ein. Steht im Eingang P ein Druck an, so herrscht zwar in den Ringräumen 27 und 28 gleicher Druck. Wegen der unterschiedlich großen Ringflächen wird der Steuerbolzen 16 jedoch zusätzlich zur Federkraft 29 auch von einer hydraulischen Kraft in die Rastkerbe gedrückt. Der Eingang P des Steuerventils 12 ist mit dem Ausgang B und der Eingang T mit dem Ausgang A verbunden. Bei im Eingang P anstehendem Druck kann deshalb z.B. ein an die Ausgänge A und B angeschlossener Hydrozylinder betätigt werden. Um den Hydromotor 10 laufenzulassen, wird zunächst das Startventil 13 geschaltet. Dadurch wird der Ringraum 28 entlastet, während im Ringraum 27 der Druck in der Leitung P herrscht. Die von diesem Druck und an der der Ringkammer 27 zugewandten Ringfläche des Außenbunds 26 erzeugte Kraft überwindet die Kraft der Feder 29 und schiebt den Ventilkolben 15 bezüglich der Steuerscheibe 17 nach radial außen bis gegen einen Anschlag, der so angeordnet ist, daß nun der Steuerbolzen 16 einen Abstand von der Steuerscheibe 17 hat. In dieser Position des Ventilkolbens 15 ist der Ausgang B des Steuerventils 12 ungedrosselt mit dem Eingang T verbunden. Sieht man von der Drossel 21 ab, so ist auch der Ausgang E ungedrosselt mit dem Eingang T verbunden. Der Ausgang A ist mit dem Eingang P verbunden. Wird nun das Drehrichtungsventil 11 geschaltet, so beginnt der'Hydromotor 10, sich zu drehen. Kurz bevor eine weitere, je nach der anzusteuernden Position des Maschinenteils ausgewählte Rastkerbe 20 der Steuerscheibe 17 vor den Steuerbolzen 16 gerät, schaltet das Startventil wieder in seine Ruhestellung um, so daß der Ringraum 28 mit demselben Druck wie der Ringraum 27 beaufschlagt wird. Wegen der größeren Ringfläche des Ringraums 28 werden der Steuerbolzen 16 und der Ventilkolben 15 nach radial innen auf die Steuerscheibe 17 zu bewegt, bis der Steuerbolzen 16 auf einen zwischen zwei Rastkerben befindlichen Abschnitt der Steuerkurve 19 stößt. In dieser Position sind dieselben Aus- und Eingänge des Steuerventils 12 miteinander verbunden wie in der vorher beschriebenen Position des Ventilkolbens 15. Es ist lediglich zwischen den Eingang T und den Ausgang E, also in den Ablauf des Hydrauliköls eine Drosselstelle 30 geschaltet. Der Hydromotor 10 dreht sich nun mit langsamerer Geschwindigkeit weiter, bis der Steuerbolzen 16 in die nächste Rastkerbe 20 einschnappen kann und beide Motorleitungen mit Tank verbunden sind.

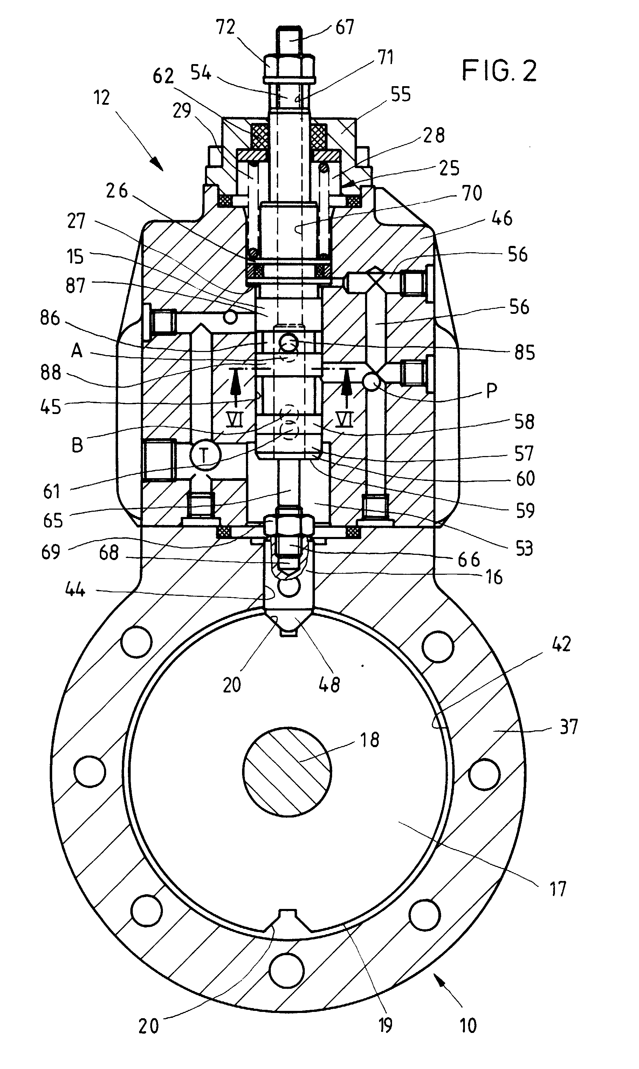

In Figur 2 erkennt man die Motorwelle 18, die in nicht näher dargestellter Weise an zwei voneinander beabstandeten Abschnitten mittels jeweils eines Gleitlagers in einem mehrteiligen Motorgehäuse 37 drehbar gelagert ist.

Die Motorwelle 18 ragt in eine Kammer 42 des Motorgehäuses 37, die durch einen Deckel 43 verschlossen ist und in der sich die drehfest auf der Motorwelle 18 sitzende Steuerscheibe 17 befindet, die die schon in Figur 1 erkennbare Steuerkurve 19 mit den zwei Rastkerben 20 hat. Im Bereich der Steuerscheibe 17 mündet in die Kammer 42 eine radial durch das Motorgehäuse 37 hindurchgeführte Bohrung 44, die sich außerhalb des Motorgehäuses in einer Ventilbohrung 45 fortsetzt, die sich in einem an das Motorgehäuse 37 angebauten Ventilgehäuse 46 des Steuerventils 12 befindet und deren Achse mit der Achse der Bohrung 44 zusammenfällt. Diese Achse verläuft radial zur Achse der Motorwelle 18 und der Steuerscheibe 17.

In der Bohrung 44 ist der Steuerbolzen 16 und in der Ventilbohrung 45 der Ventilkolben 15 geführt, wobei Steuerbolzen 16 und Ventilkolben 15 als getrennte Teile hergestellt sind. Das der Steuerscheibe 17 zugekehrte Ende 48 des Steuerbolzens ist keilförmig gestaltet, wobei die Scheitellinie des Keils parallel zur Motorwelle verläuft. Damit die Scheitellinie diese Richtung immer beibehält, ist der Steuerbolzen 16 verdrehgesichert. Dazu ist die Bohrung 44 mit einer Längsnut 49 versehen, in die eine Kugel 50 eingreift, die in einer Ausnehmung 51 des Steuerbolzens 16 aufgenommen ist. Diametral der Längsnut 49 gegenüber und in einer durch die Achse des Steuerbolzens 16 und die Achse der Steuerscheibe 17 aufgespannten Ebene verläuft entlang der Bohrung 44 eine zweite Längsnut 52, durch die eine offene Verbindung zwischen der Kammer 42 und einer sich unmittelbar an das Motorgehäuse 37 anschließende Ventilkammer 53 innerhalb der Ventilbohrung 45 hergestellt ist. Diese Ventilkammer 53 ist mit dem Eingang T des Steuerventils 12 verbunden. Der Steuerraum 25 befindet sich, von der Ventilkammer 53 aus gesehen, jenseits eines engeren Abschnitts der Ventilbohrung 45 im Gehäuse 54 des Steuerventils 12 und ist nach außen durch einen auf das Ventilgehäuse 46 aufgesetzten Deckel 55 verschlossen. In dem Steuerraum 25 erkennt man die Druckfeder 29 und den Außenbund 26 des Ventilkolbens 15.

Der Ventilkolben 15 ist durch den Deckel 55 hindurch nach außen geführt und außerhalb des Ventilgehäuses 46, zu dem auch der Deckel 55 gehört, mit einem Zweiflach 54 versehen. Die Durchführung ist durch einen Dichtring 62 abgedichtet, der in einer Tasche des Deckels 55 zwischen diesem und dem Ventilkolben 15 angeordnet ist.

Die Anschlüsse P, T, A, B und E am Ventilgehäuse 46 des Steuerventils 12 sind so mit der Ventilbohrung 45 verbohrt, daß mit diesem Ventil in den einzelnen Schaltstellungen des Ventilkolbens 15 die im Zusammenhang mit der Erklärung der Figur 1 angesprochenen Verbindungen herstellbar sind. Aus Figur 2 ist insbesondere auch ersichtlich, daß die Ventilkammer 53 mit dem Anschluß T und daß der Ringraum 27 über zwei Bohrungen 56 dauernd mit dem Anschluß P verbunden ist.

Im Bereich des Übergangs von der Ventilkammer 53 in den engeren Abschnitt der Ventilbohrung 45 besitzt der Ventilkolben 15 zwei unmittelbar aneinander anschließende Ringbunde 57 und 58. Der innere Ringbund 58 hat einen Durchmesser, der dem Durchmesser des engeren Abschnitts der Ventilbohrung 45 entspricht. Der Ringbund 57 ist im Durchmesser geringfügig kleiner als der Ringbund 58. Er schließt an der dem Ringbund 58 abgewandten Stirnseite 59 mit einer Fase 60 ab.

Der Steuerbolzen 16 und der Ventilkolben 15 sind über eine Justierstange 65 fest miteinander verbunden, die an ihren beiden Enden jeweils mit einem Gewindeabschnitt 66 bzw. 67 versehen ist. Mit dem Gewindeabschnitt 66 ist sie in einen zentrale und axiale, von der dem Ventilkolben 15 zugewandten Stirnseite in den Steuerbolzen 16 eingebrachte Gewindebohrung 68 eingeschraubt. Mit einer Kontermutter 69 ist die Verbindung zwischen der Justierstange 65 und dem Steuerbolzen 16 gesichert.

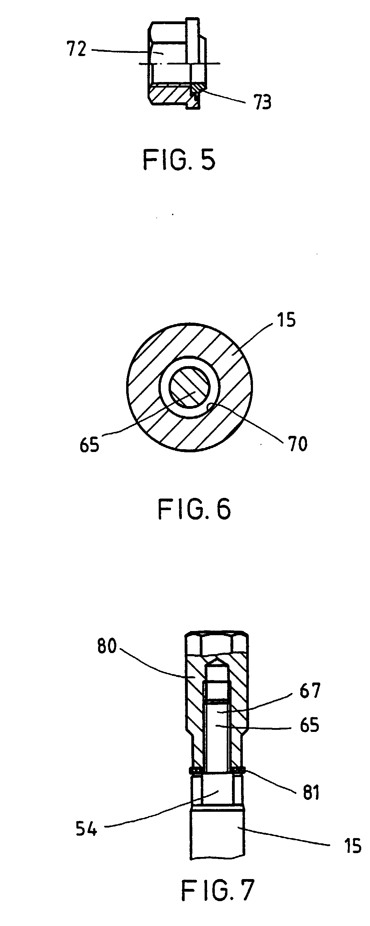

Ganz durch den Ventilkolben 15 geht zentral eine Axialbohrung 70 hindurch, durch die sich die Justierstange 65 vom Steuerbolzen 16 aus bis jenseits des Ventilkolbens 15 erstreckt, so daß sie außerhalb des Ventilgehäuses 46 über den Ventilkolben 15 vorsteht. Ihr Gewindeabschnitt 67 befindet sich teilweise innerhalb des Ventilkolbens 15 und greift dort in ein Innengewinde 71 des Ventilkolbens 15 ein. Auf den vorstehenden Teil des Gewindeabschnitts 67 der Justierstange 65 ist eine Kontermutter 72 aufgeschraubt, die axial fest am Ventilkolben 15 anliegt und Justierstange 65 und Ventilkolben 15 in ihrer Lage zueinander sichert. Die Kontermutter 72 ist eine Bundmutter, in die, wie man näher aus Figur 5 erkennt, ein Dichtring 73 eingebracht ist. Dieser Dichtring drückt sich beim Anziehen der Kontermutte 72 an die Justierstange 65 und an den Ventilkolben 15 an, so daß über die Axialbohrung 70 des Ventilkolbens 15 zwischen den ineinandergreifenden Gewindeabschnitten 67 und 71 hindurch kein Hydrauliköl nach außen gelangen kann.

Die Drosselstelle 30 zwischen den Anschlüssen T und E des Steuerventils 12 wird dadurch gebildet, daß die Bohrung 61 im Ventilgehäuse 46 vom Ringbund 57 nicht ganz abgedeckt wird, daß sich also die Stirnseite 59 des Ringbunds 57 axial innerhalb der Bohrung 61 befindet, wenn der Steuerbolzen 16 außerhalb einer Rastkerbe 70 auf der Steuerkurve 19 aufliegt. Die Größe der Fläche, in der der Ringbund 57 die Bohrung 61 freiläßt, kann nun dadurch verändert werden, daß der Abstand zwischen dem Steuerbolzen 16 und dem Ventilkolben 15 verändert wird. Dazu wird die Kontermutter 72, die leicht außerhalb des Gehäuses 46 zugänglich ist, gelöst. Dann wird am Zweiflach 54 des Ventilkolbens 15 ein Werkzeug angesetzt und damit der Ventilkolben 15 gegenüber der Justierstange 65 verdreht. Diese dreht sich nicht mit, da sie einerseits verdrehsicher mit dem Steuerkolben 16 verbunden und da andererseits der Steuerbolzen 16 über die Kugel 50 gegenüber dem Motorgehäuse 37 verdrehgesichert ist. Durch Verdrehen des Ventilkolbens 15 gegenüber der Justierstange 65 ändert sich der Abstand zwischen dem Steuerbolzen 16 und dem Ventilkolben 15 und damit die Größe des Öffnungsquerschnitts der Drossel 30. Beim Eintauchen des Steuerbolzens 16 in eine Rastkerbe 20 gerät, wie aus Figur 2 ersichtlich, die Stirnseite 59 des Ventilkolbens 15 aus dem Bereich der Bohrung 61 heraus, so daß nur noch der Ringspalt zwischen dem Ringbund 57 und der Bohrung 45 den Drosselquerschnitt bestimmt. Dieser Querschnitt ist unabhängig von der vorherigen Justage. Die Fase 60 glättet den Übergang zwischen verschiedenen Drosselquerschnitten. Man erkannt, daß sich bei einem erfindungsgemäßen Positionierantrieb der beim Aufliegen des Steuerbolzens 16 auf der Steuerkurve 19 außerhalb einer Rastkerbe 20 wirksame Öffnungsquerschnitt der Drossel 30 auf sehr einfache Weise einstellen läßt. Es ist kein Eingriff in das Ventilgehäuse 46 notwendig. Kein Öl läuft aus. Eine Entlüftung wird vermieden.

Bei der Ausführung nach Figur 7, in der man den Ventilkolben 15 eines Steuerventils 12 und die Justierstange 65 mit ihrem Gewindeabschnitt 67 erkennt, ist anstelle der Bundmutter 72 der Ausführung nach den Figuren 2 bis 6 eine Hutmutter 80 verwendet, um den Ventilkolben 15 und die Justierstange 65 aneinander zu sichern. Die Hutmutter 80 ist auf den Gewindeabschnitt 67 der Justierstange 65 aufgeschraubt und klemmt axial zwischen sich und dem Ventilkolben 15 einen Dichtring 81 ein. Wegen der Verwendung einer Hutmutter muß dieser Dichtring nicht auch an der Justierstange 65 anliegen. Im übrigen geschieht die Justierung des Ventilkolbens 15 zu einem Steuerkolben bei der Ausführung nach Figur 7 in derselben Weise wie bei der Ausführung nach den Figuren 2 bis 6. Es wird zunächst die Hutmutter 80 gelöst und dann durch Angriff am Zweiflach 54 des Ventilkolbens 15 dieser gegenüber der Justierstange 65 verdreht. Dann wird die Hutmutter 80 wieder festgezogen.

Bei beiden Ausführungen kann die Axialbohrung 70 im Ventilkolben 15 zugleich dafür benutzt werden, um über die Axialbohrung eine Verbindung zwischen zwei Anschlüssen des Steuerventils 12 herzustellen. Der Ventilkolben 15 ist dazu zusätzlich mit zwei sich einander diametral gegenüberliegenden Querbohrungen 85 versehen, die sich in einem Kolbenhals 86 befinden, der einerseits von einem Kolbenbund 87, der den Ringraum 27 dauernd vom Tankanschluß T trennt, und andererseits von einem Kolbenbund 88 begrenzt wird, der die Verbindung des Anschlusses A mit dem Druckanschluß P und dem Tankanschluß T und die Verbindung des Anschlusses B mit dem Druckanschluß P steuert. Über die Querbohrung 85 und den sich zwischen der Querbohrung 85 und der Stirnseite 59 befindlichen Abschnitt der Axialbohrung 70 ist der Anschluß A mit dem Tankanschluß T verbindbar. Dazu hat die Axialbohrung 70 in den besagten Abschnitt einen größeren Durchmesser als in dem Abschnitt zwischen der Querbohrung 85 und dem aus dem Gehäuse 46 herausragenden Ende.

## Patentansprüche

1. Positionierantrieb, insbesondere für eine Werkzeugmaschine, mit einem Hydromotor (10), der eine mit einer Motorwelle (18) drehbare, mit einer Steuerkurve (19) versehene Steuerscheibe (17) besitzt, mit einem Steuerventil (12), das mit dem Hydromotor (10) eine Baueinheit mit einem vorzugsweise mehrteiligen Gehäuse (37, 46) bildet und einen zwischen mehreren Stellungen verschiebbaren Ventilkolben (15) aufweist, mit einem Steuerelement (16), über das der Ventilkolben (15) an der Steuerscheibe (17) abstützbar ist, und mit einem betrieblich zwischen dem Steuerelement (16) und dem Ventilkolben (15) und koaxial zum Ventilkolben (15) angeordneten Justierelement (65), durch dessen relative Verstellung zum Ventilkolben (15) die relative Lage zwischen Ventilkolben (15) und Steuerelement (16) veränderbar ist und dessen Lage zum Ventilkolben (15) durch ein lösbares Sicherungselement (72, 80) sicherbar ist, **dadurch gekennzeichnet**, daß das äußere Teil (15) der beiden Teile Ventilkolben (15) und Justierelement (65) durch das Gehäuse (46) nach außen geführt ist und daß das Sicherungselement (72, 80) außerhalb des Gehäuses (46) zugänglich ist.

2. Positionierantrieb nach Anspruch 1, **dadurch gekennzeichnet**, daß das innere Teil (65) der beiden Teile Ventilkolben (15) und Justierelement (65) durch das äußere Teil (15) nach außen geführt ist, daß das innere Teil (65) das äußere Teil (15) überragt und daß das Sicherungselement eine auf das innere Teil (65) aufgeschraubte Schraubenmutter (72, 80) ist.

3. Positionierantrieb nach Anspruch 1 oder 2, **dadurch gekennzeichnet,** daß zwischen dem Gehäuse (46) und dem nach außen geführten Abschnitt des äußeren Teils (15) eine Dichtung (62) vorhanden ist und daß der Spalt zwischen dem Ventilkolben (15) und dem Justierelement (65) durch eine Dichtung (73, 81) nach außen abgedichtet ist.

4. Positionierantrieb nach Anspruch 1, 2 oder 3, **dadurch gekennzeichnet**, daß das Steuerelement (16) an einem ersten Ende des Ventilkolbens (15) angeordnet ist, daß der Ventilkolben (15) mit seinem anderen, zweiten Ende aus der Baueinheit (10, 12) herausragt und eine durchgehende Axialbohrung (70) aufweist, daß das Justierelement eine Justierstange (65) ist und in der Axialbohrung (70) aufgenommen ist und daß durch ein Außengewinde (67) an der Justierstange (65) und ein Innengewinde (71) am Ventilkolben (15) ein Schraubgelenk zwischen Justierstange (65) und Ventilkolben (15) gebildet ist.

5. Positionierantrieb nach Anspruch 4, **dadurch gekennzeichnet**, daß die Justierstange (65) einen Außengewindeabschnitt (67) aufweist, mit dem sie in das Innengewinde (71) des Ventilkolbens (15) eingreift, daß dieser Außengewindeabschnitt (67) über den Ventilkolben (15) hinausragt und daß auf diesen Außengewindeabschnitt (67) eine Kontermutter (72, 80) aufgeschraubt ist.

6. Positionierantrieb nach Anspruch 4 oder 5, **dadurch gekennzeichnet**, daß das Steuerelement als Steuerbolzen (16) in Verlängerung des Ventilkolbens (15) angeordnet ist und daß die Justierstange (65) als separates Bauteil am Steuerbolzen (16) befestigt, insbesondere mit dem Steuerbolzen (16) verschraubt ist.

7. Positionierantrieb nach einem der Ansprüche 4 bis 6, **dadurch gekennzeichnet**, daß das Steuerelement als Steuerbolzen (16) in Verlängerung des Ventilkolbens (15) angeordnet und verdrehgesichert im Gehäuse (37) geführt ist und daß die Justierstange (65) verdrehgesichert mit dem Steuerbolzen (16) verbunden ist.

8. Positionierantrieb, insbesondere nach einem der Ansprüche 4 bis 7, **dadurch gekennzeichnet**, daß über die Axialbohrung (70) des Ventilkolbens (15) zwei Fluidanschlüsse (A, T) der Baueinheit (10, 12) miteinander verbindbar sind.

9. Positionierantrieb nach Anspruch 8, **dadurch gekennzeichnet**, daß die Axialbohrung (70) axial zu einer Kammer (53) des Gehäuses (37, 46) offen ist, die mit einem ersten Fluidanschluß (T), vorzugsweise mit einem Tankanschluß (T) verbunden ist und daß der Ventilkolben (15) eine in die Axialbohrung (70) mündende Querbohrung (85) aufweist, die mit einem zweiten Fluidanschluß (A) verbindbar ist.

## Claims

1. A positioning drive, in particular for a machine tool, having a hydraulic motor (10) which has a cam disk (17) which is rotatable with a motor shaft (18) and is provided with a cam (9), having a control valve (12) with which the hydraulic motor (10) forms a structural unit with a preferably multipartite housing (37, 46) and which has a valve piston (15) which is displaceable between several positions, having a control element (16) via which the valve piston (15) can rest against the cam disk (17), and having an adjustment element (65) which is operatively arranged between the control element (16) and the valve piston (15) and coaxial to the valve piston (15), by relative displacement of which adjustment element with respect to the valve piston (15) the relative position between valve piston (15) and control element (16) can be varied and the position of which adjustment element with respect to the valve piston (15) is secured by a releasable securing element (72, 80), characterized by the fact that the outer part (15) of the two parts, valve piston (15) and adjustment element (65), is guided outward through the housing (46) and that the locking element (72, 80) is accessible from outside the housing (46).

2. A positioning drive according to Claim 1, characterized by the fact that the inner part (65) of the two parts, valve piston (15) and adjustment element (65), is guided outward through the outer part (15); that the inner part (65) protrudes beyond the outer part (15); and that the securing element is a threaded nut (72, 80) which is screwed onto the inner part (65).

3. A positioning drive according to Claim 1 or 2, characterized by the fact that a packing (62) is present between the housing (46) and the outward guided section of the outer part (15) and that the slot between the valve piston (15) and the adjustment element (65) is sealed from the outside by a packing (73, 81).

4. A positioning drive according to Claim 1, 2 or 3, characterized by the fact that the control element (16) is arranged on a first end of the valve piston (15); that at its other, second end, the valve piston (15) extends out of the structural unit (10, 12) and that the valve piston (15) has a continuous axial bore (70); that the adjustment element is an adjustment rod (65) and is contained within the axial bore (70); and that a threaded joint is formed between adjustment rod (65) and valve piston (15) by an external thread (67) on the adjustment rod (65) and an internal thread (71) on the valve piston (15).

5. A positioning drive according to Claim 4, characterized by the fact that the adjustment rod (65) has an externally threaded section (67) by which it engages into the internal thread (71) of the valve piston (15); that this externally threaded section (67) protrudes beyond the valve piston (15); and that a lock nut (72, 80) is screwed on this externally threaded section (67).

6. A positioning drive according to Claim 4 or 5, characterized by the fact that the control element is arranged as control bolt (16) in the extension of the valve piston (15); and that the adjustment rod (65) is fastened as separate part on the control bolt (16) in particular screwed on the control bolt (16).

7. A positioning drive according to any of Claims 4 to 6, characterized by the fact that the control element is arranged as control bolt (16) in the extension of the valve piston (15) and is guided, secured against rotation, in the housing (37); and that the adjustment rod (65) ist connected, secured in rotation, to the control bolt (16).

8. A positioning drive, in particular according to any of Claims 4 to 7, characterized by the fact that two fluid connections (A, T) of the structural unit (10, 12) can be connected to each other via the axial bore (70) of the valve piston (15).

9. A positioning drive according to Claim 8, characterized by the fact that the axial bore (70) ist open axially towards a chamber (53) of the housing (37, 46) which chamber is connected with a first fluid connection (T), preferably with a tank connection (T); and that the valve piston (15) has a transverse bore (85) which debouches into the axial bore (70) and can be connected to a second fluid connection (A).

## Revendications

1. Un entraînement de positionnement, en particulier pour une machine-outil, doté d'un moteur (10) hydraulique qui possède un galet (17) de commande, lequel peut être amené à tourner à l'aide d'un arbre (18) de moteur et possède un profil de commande (19), doté d'une valve (12) de pilotage, laquelle avec le moteur (10) hydraulique est réunie dans une unité constructive comportant un corps (37, 46) de préférence scindé en plusieurs éléments, et laquelle possède un tiroir (15) de valve pouvant être amené à coulisser entre plusieurs positions, doté d'un élément de commande (16), au travers duquel le tiroir (15) de valve peut venir s'appuyer contre le galet (17) de commande, et doté d'un élément d'ajustement (65), lequel est disposé du point de vue de son fonctionnement entre l'élément de commande (16) et le tiroir (15) de valve, de façon coaxiale par rapport au tiroir (15) de valve, et dont le déplacement par rapport au tiroir (15) de valve permet de modifier la position relative entre le tiroir (15) de valve et l'élément de commande (16) et enfin dont la position par rapport au tiroir (15) de valve peut être verrouillée à l'aide d'un élément (72, 80) de verrouillage déverrouillable, **caractérisé en ce que** l'élément externe (15) des deux éléments tiroir (15) de valve et élément d'ajustement (65) est menée vers l'extérieur au travers du corps (46) et que l'élément (72, 80) de verrouillage est accessible à l'extérieur du corps (46).

2. Un entraînement de positionnement conforme à la revendication n°1, **caractérisé en ce que** l'élément interne (65) des deux éléments tiroir (15) de valve et élément d'ajustement (65) est menée vers l'extérieur au travers de l'élément externe (15), que l'élément interne (65) dépasse par rapport à l'élément externe (15) et que l'élément de verrouillage est un écrou (72, 80) à filetage, vissé sur l'élément interne (65).

3. Un entraînement de positionnement conforme à une des revendications n^{os} 1 ou 2, **caractérisé en ce que** un joint (62) est disposé entre le corps (46) et la section de l'élément externe (15) qui est menée vers l'extérieur, et que la fente entre le tiroir (15) de valve et l'élément d'ajustement (65) est isolée par rapport à l'extérieur grâce à un joint (73, 81).

4. Un entraînement de positionnement conforme à une des revendications n^{os} 1, 2 ou 3, **caractérisé en ce que** l'élément de commande (16) est disposé au niveau d'une première extrémité du tiroir (15) de valve, que le tiroir (15) de valve de par son autre et seconde extrémité se dégage hors de l'unité constructive (10, 12) et présente un forage (70) axial le traversant, que l'élément d'ajustement est une tige (65) d'ajustement et est hébergé dans le forage (70) axial, et qu'un joint à vis est formé, entre la tige (65) d'ajustement et le tiroir (15) de valve, par un filetage (67) extérieur sur la tige (65) d'ajustement et un filetage (71) intérieur sur le tiroir (15) de valve.

5. Un entraînement de positionnement conforme à la revendication n° 4, **caractérisé en ce que** la tige (65) d'ajustement comporte une section à filetage (67) extérieur avec laquelle elle s'engrène dans le filetage (71) intérieur du tiroir (15) de valve, que cette section à filetage (67) extérieur se dégage hors du tiroir (15) de valve et qu'un contrécrou (72, 80) est vissé sur cette section à filetage (67) extérieur.

6. Un entraînement de positionnement conforme aux revendications n° 4 ou n° 5, **caractérisé en ce que** l'élément de commande est disposé comme goujon (16) de commande en prolongation du tiroir (15) de valve, et que la tige (65) d'ajustement est attachée au goujon (16) de commande, sous forme d'élement constructif séparé, en particulier reliée au goujon (16) de commande par vissage.

7. Un entraînement de positionnement conforme à une des revendications n^{os} 4 à 6, **caractérisé en ce que** l'élément de commande est disposé comme goujon (16) de commande en prolongation du tiroir (15) de valve et est guidé dans le corps (37) de façon à prévenir toute rotation, et que la tige (65) d'ajustement est reliée au goujon (16) de commande de façon à prévenir toute rotation.

8. Un entraînement de positionnement, en particulier conforme à une des revendications n^{os} 4 à 7, **caractérisé en ce qu**'au travers du forage (70) axial du tiroir (15) de valve peuvent être raccordés, l'un à l'autre, deux ports (A, T) de fluide de l'unité constructive (10, 12).

9. Un entraînement de positionnement conforme à la revendication n° 8, **caractérisé en ce que** le forage (70) axial est longitudinalement ouvert sur une chambre (53) du corps (37, 46), laquelle est raccordée à un premier port (T) de fluide, de préférence à un port (T) de réservoir, et que le tiroir (15) de valve présente un forage (85) transversal, lequel débouche dans le forage (70) axial et peut être raccordé à un second port (A) de fluide.
